# EUROPEAN PATENT APPLICATION

(11) **EP 2 966 291 A1**
(43) Date of publication of application: **13.01.2016**
(21) Application number: 14176718.6
(22) Date of filing: 11.07.2014
(51) Int. Cl.: F02M 35/10, F02M 35/04, F02D 9/00, F02D 9/12, F02M 35/02

(54) **Air filter unit for internal combustion engines**

(71) Applicant: Caterpillar Motoren GmbH & Co. KG, 24159 Kiel (DE)
(72) Inventor: Sixel, Eike Joachim, 24109 Kiel (DE); Lange, Hendrik Johannes, 24116 Kiel (DE); Krüger, Markus, 23795 Weede (DE)
(74) Representative: Kramer Barske Schmidtchen Patentanwälte PartG mbB

(57) **Abstract**

The present disclosure relates to an air filter unit (150) for attaching to a compressor (44) of a turbocharger of an internal combustion engine configured to combust an air/fuel mixture having a desired air-to-fuel ratio. The air filter unit (150) may comprise a housing (151) having an air inlet (156) and an air outlet (158) configured to be fluidly connected to the compressor (44). The air filter unit may further comprise an air filter (152) disposed within the housing (151) between the air inlet (156) and the air outlet (158). During operation of the internal combustion engine, the air inlet (156) may be adjustable in size with a cover device (160) having an adjustable cover member (162A to 162D) for at least partially controlling the air-to-fuel ratio.

## Description

### Technical Field

The present disclosure relates to an air filter unit for attaching to a compressor of a turbocharger of an internal combustion engine and, specifically, to an air filter unit including a cover device. The present disclosure further relates to a method for controlling an air-to-fuel ratio of an air/fuel mixture to be combusted by an internal combustion engine.

### Background

For operating internal combustion engines running at least temporarily on, for instance, gaseous fuel at low loads, such as, for example, during idling, it is known to provide a throttle valve downstream of a compressor of a turbocharger for controlling the amount of air provided into an intake manifold. During the start up or in idle operation or low load operation of a gaseous fuel internal combustion engine, the air-to-fuel ratio of the air/fuel mixture to be combusted may be too high for providing a stable combustion. Such a lean air/fuel mixture may drive the internal combustion engine into misfiring or may lead to a shutdown of the internal combustion engine.

The above-mentioned throttle valve may be utilized for controlling the amount of air flowing into the cylinders thereby controlling the air-to-fuel ratio of the air/fuel mixture to be combusted inside the cylinders of the engine. The throttle valve is usually located between the compressor of a turbocharger and an intake manifold. However, during higher load operation of the internal combustion engine, an opened throttle valve may lead to an increase of pressure loss in the compressed air system, which may reduce the engine's efficiency.

The present disclosure is directed, at least in part, to improving or overcoming one or more aspects of prior systems.

### Summary of the Disclosure

According to an aspect of the present disclosure, an air filter unit for attaching to a compressor of a turbocharger of an internal combustion engine configured to combust an air/fuel mixture having a desired air-to-fuel ratio may comprise a housing having an air inlet and an air outlet configured to be fluidly connected to the compressor, and an air filter disposed within the housing between the air inlet and the air outlet. During operation of the internal combustion engine, the air inlet may be adjustable in size with a cover device having an adjustable cover member for at least partially controlling the air-to-fuel ratio.

According to another aspect of the present disclosure, a compressor of a turbocharger of an internal combustion engine may comprise a compressor inlet, and at least one air filter unit according to the present disclosure, wherein the air filter unit may be attached to the compressor inlet.

According to another aspect of the present disclosure, an internal combustion engine configured to combust an air/fuel mixture having a desired air-to-fuel ratio may comprise at least one compressor of a turbocharger according to the present disclosure, and a control unit configured to control the air-to-fuel ratio by adjusting the size of the air inlet.

According to another aspect of the present disclosure, a method for controlling an air-to-fuel ratio of an air/fuel mixture to be combusted by an internal combustion engine including a compressor of a turbocharger and at least one air filter unit having an air outlet fluidly connected to the compressor and an air inlet may comprise adjusting the size of the air inlet during operation of the internal combustion engine.

In some embodiments, the adjustable cover member may be movable between an open position and a closed position. In the open position, the adjustable cover member may be configured to provide a maximum size of the air inlet, and, in the closed position, the adjustable cover member may be configured to at least partially cover the air inlet.

In some embodiments, adjusting the size of the air inlet may include at least partially covering the air inlet with an adjustable cover member of a cover device.

Within the meaning of the present disclosure, the open position of the cover device may be referred to as a position of the adjustable cover in which the air inlet may have its maximum size. In contrast, the closed position of the cover device may be referred to as a position of the adjustable cover in which the air inlet may have its minimum size. For example, the closed position may be a position in which the adjustable cover substantially fully covers the air inlet.

Additionally, within the meaning of the present disclosure, the size of an air inlet of an air filter unit may be referred to as the size of the effective filter area of the air filter unit through which fresh air may be sucked into the engine's air system. In case of, for example, a cylindrical air filter having an annular cross-section, the air inlet may be limited by the outer lateral surface of the air filter.

In some embodiments, alternatively or additionally to adjusting the size of the air inlet, it may be advantageous to adjust the size of an air outlet of the air filter unit for controlling the amount of air exiting the air filter unit.

Other features and aspects of this disclosure will be apparent from the following description and the accompanying drawings.

### Brief Description of the Drawings

Fig. 1 shows a schematic diagram of an internal combustion engine comprising an exemplary disclosed air filter unit;
Fig. 2 shows an exemplary embodiment of an air filter unit in an open position according to the present disclosure;
Fig. 3 shows the air filter unit of Fig. 2 in a closed position;
Fig. 4 shows a further exemplary embodiment of an air filter unit in an at least partially open position according to the present disclosure; and
Fig. 5 shows the air filter unit of Fig. 4 in an at least partially closed position.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based at least in part on the realization that adjusting the size of an air inlet of an air filter unit may control the amount of air sucked into the air filter unit and supplied to a compressor configured to compress the air to desired pressures. This may in turn control the amount of air compressed by the compressor and, thus, may control an air-to-fuel-ratio of an air/fuel mixture to be combusted by the internal combustion engine. Adjusting the size of the air inlet may be especially effective during low load operation of an internal combustion engine, such as, for instance, an engine load smaller than 30 % of maximum engine load.

The present disclosure may be further based at least in part on the realization that, instead of providing a throttle valve downstream the compressor which may lead to additional pressure loss during higher engine loads, providing a cover device configured to at least partially cover an air inlet of an air filter unit disposed upstream of a compressor may effectively control the air-to-fuel ratio during low load operation of an internal combustion engine, particularly without any additional pressure loss. Thus, the efficiency of the internal combustion engine may be maintained at constant levels.

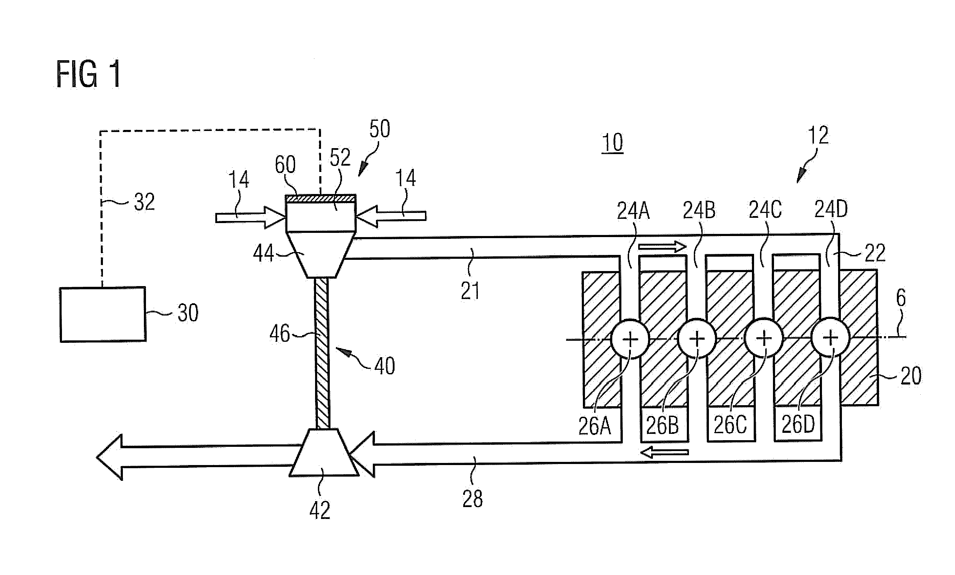

Referring to Fig. 1, an internal combustion engine 10 is illustrated. The internal combustion engine 10 may include features not shown, such as fuel systems, air systems, cooling systems, peripheries, drive train components, control systems etc. For the purposes of the present disclosure, the internal combustion engine 10 is a single-stage turbocharged internal combustion engine running on gaseous fuel. Particularly, the internal combustion engine 10 is an internal combustion engine running on different gaseous fuels, such as natural gas and/or biogas, depending on specific operational states.

One skilled in the art will recognize, however, that the internal combustion engine 10 may be any type of engine (gas, natural gas, propane, dual fuel, etc.) that utilizes an air/fuel mixture for combustion. Thus, the internal combustion engine 10 may also be a two-stage turbocharged internal combustion engine. Further, in some types of combustion engines, the air/fuel mixture may be supplied to the combustion engine via an intake manifold. In other types of combustion engines, only air may be supplied to the combustion engine via the intake manifold, and fuel may be separately injected into each cylinder prior to combustion.

The internal combustion engine 10 may be of any size, with any number of cylinders and in any configuration ("V", "in-line", etc.). The internal combustion engine 10 may be used to power any machine or other device, including locomotive applications, on-highway trucks or vehicles, off-highway machines, earth-moving equipment, generators, aerospace applications, marine applications, pumps, stationary equipment such as power plants, or other engine-powered applications.

The internal combustion engine 10 comprises an engine block 20 including a bank of cylinders 26A to 26D, at least one fuel tank (not shown), a turbocharger 40 associated with the cylinders 26A to 26D, and an intake assembly 12.

The engine block 20 includes a crankcase (not shown) within which a crankshaft 6 indicated by a dot-dashed line is supported. The crankshaft 6 is connected to pistons (not shown) that are movable within each of the cylinders 26A to 26D during operation of the internal combustion engine 10.

The intake assembly 12 comprises an intake manifold 22 and a plurality of intake ports 24A to 24D. The intake manifold 22 defines a flow direction of the intake air in the intake manifold 22 (shown by an arrow in Fig. 1) and is fluidly connected to each of the cylinders 26A to 26D via a corresponding one of the intake ports 24A to 24D of the cylinders 26A to 26D. The inlet ports 24A to 24D are configured to receive the intake air the intake manifold 22 and compressed gaseous fuel from, for instance, a gas admission valve (not shown). The gas admission valve may be used for mixing the intake air with gaseous fuel for providing an air/fuel mixture having a desired air-to-fuel ratio. Generally, the inlet ports 24A to 24D may be formed at least in part in respective cylinder heads or in a common cylinder head (not shown) of the cylinders 26A to 26D.

An exhaust manifold 28 is connected to each of the cylinders 26A to 26D. Each of the cylinders 26A to 26D is provided with at least one exhaust valve (not shown) configured to open and close a fluid connection between the combustion chamber of the corresponding cylinder and the exhaust manifold 28.

The turbocharger 40 is configured to use the heat and pressure of the exhaust gas of the internal combustion engine 10 to drive a compressor 44 for compressing the intake air prior to being supplied to the cylinders 26A to 26D. Specifically, exhaust gas passing a turbine 42 of the turbocharger 40 rotates the turbine 42, thereby decreasing in pressure and temperature. The compressor 44 is rotatably connected to the turbine 42 via a common shaft 46 and driven by the turbine 42.

The intake air may be sucked into the compressor 44 from the engine's environment (indicated by arrows 14). An air filter unit 50 is attached to an inlet of the compressor 44. The air filter unit 50 is configured to remove any particulate matter in the air and includes - as schematically illustrated - a housing 51, an air filter 52, and a cover device 60.

The compressor 44 may compress the intake air to about 3 to 4 bar at 100°C to 250°C and a cooler (not shown) may cool the charge air to about 45°C. After combustion, the exhaust gas may have a pressure of about 3 to 4 bar at a temperature in the range from about 350°C to 700°C.

Generally, an outlet of the compressor 44 is fluidly connected to an inlet of the intake manifold 22 via a compressor connection 21. In some embodiments, an outlet of the compressor 44 may be connected to the inlet of the intake manifold 22 via an intake throttle valve arranged downstream of the compressor 44. The intake throttle valve may be configured to open or close the fluid connection between the compressor connection 21 and intake manifold 22, thereby enabling or restricting the flow of the intake air from the compressor connection 21 into the intake manifold 22.

During operation of the internal combustion engine 10, both the intake air and the gaseous is compressed prior being supplied to the cylinders 26A to 26D. Within the cylinders 26A to 26D, further compression and, therefore, heating of the air/fuel mixture is caused through the movement of the pistons. Therein, an ignition event may ignite the air/fuel mixture. Then, exhaust gases, which are discharged via the exhaust manifold 28, are produced.

An outlet of the exhaust manifold 28 is fluidly connected to an inlet of the turbine 42. An outlet of the turbine 42 may be fluidly connected to, for example, an exhaust gas treatment system (not shown) configured to treat the exhaust gas.

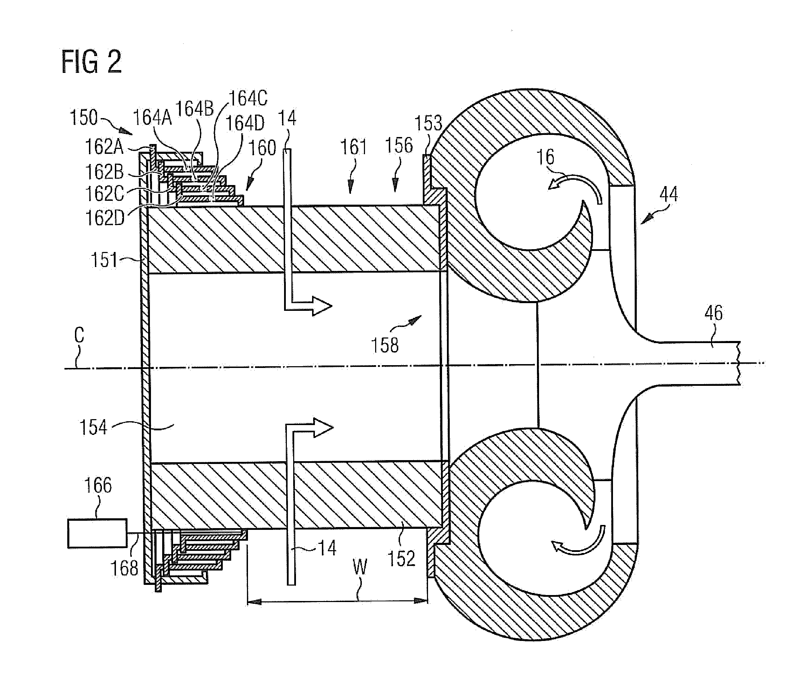

As further depicted in Fig. 1, the internal combustion engine may include a control unit 30 configured to control the engine operation. Additionally, the control unit 30 may be configured to be communicatively connected to the air filter unit 50, particularly to the cover device 60, via a control line 32. The control unit 30 may be configured to control the cover device 60 to open or close an air inlet 56 of the air filter unit 50, which will be described in greater detail with respect to Figs. 2 to 5.

The control unit 30 may be a single microprocessor or plural microprocessors that may include means for controlling, among others, an operation of the internal combustion engine 10 and the air filter unit 50 as well as other components of the internal combustion engine 10. The control unit 30 may be a general engine control unit capable of controlling numeral functions associated with the internal combustion engine 10 and/or its associated components. In some embodiments, the control unit 30 may be a separate control unit exclusively configured to control the air filter unit 50.

The control unit 30 may include all the components required to run an application such as, for example, a memory, a secondary storage device, and a processor such as a central processing unit or any other means known in the art for controlling the internal combustion engine 10 and its various components. Various other known circuits may be associated with the control unit 30, including power supply circuitry, signal-conditioning circuitry, communication circuitry, and other appropriate circuitry. The control unit 30 may analyze and compare received and stored data, and, based on instructions and data stored in memory or input by a user, determine whether action is required.

For example, the control unit 30 may compare received values with target values stored in memory, and based on the results of the comparison, the control unit 30 may transmit signals to one or more components to alter the operation status thereof, such as, for example, the operation of the air filter unit 50.

The control unit 30 may include any memory device known in the art for storing data relating to operation of the internal combustion engine 10 and its components. The data may be stored in the form of one or more maps that describe and/or relate to, for example, operation of air filter unit 50 and/or the internal combustion engine 10. Each of the maps may be in the form of look-up tables, graphs, and/or equations, and include a compilation of data collected from lab and/or field operation of the internal combustion engine 10. The maps may be generated by performing instrumented tests on the operation of the internal combustion engine 10 under various operating conditions while varying parameters associated therewith. The control unit 30 may reference these maps and control operation of one component in response to the desired operation of another component.

The control line 32 may be a wireless connection, such as, for example, a Bluetooth connection, a WLAN connection, or an infrared connection. In some embodiments, the control line 32 may be any suitable wire connected between the control unit 30 and the air filter unit 50, such as, for example, a LAN cable.

Referring to Fig. 2, an exemplary air filter unit 150 attached to the compressor 44 is shown. The air filter unit 150 includes a housing 151, the air filter 152 at least partially accommodated within the housing 51, and the cover device 160. The air filter unit 150 includes an air inlet 156 and an air outlet 158. The air inlet 156 is defined by a portion extending about the circumference of the air filter 152 that is in contact with the environment and through which fresh air enters the air filter unit 150. The air outlet 158 is defined by a portion of the air filter unit 150 through which the filtered air exits the air filter unit 150. After exiting the air filter unit 150, the filtered air enters the compressor 44 for compression. The flow direction of air from the engine's environment into the compressor 144 is illustrated by the arrows 14 and 16 in Fig. 2.

As further shown in Fig. 2, the air filter 152 having a cylindrical shape with an annular cross-section extends along a center axis C. The air filter 152 further defines an air flow path 154 extending along the center axis C between the air inlet 156 and the air outlet 158. The housing 151 of the air filter unit 150 is attached to the compressor 44 via a flange member 153 by, for instance, bolting. In some embodiments, the air filter unit 150 may be attached to the compressor 44 via clamping brackets. In some embodimets, the air filter unit 150 may be additionally supported against, for example, the engine block 20.

The housing 151 is configured to close the air flow path 154 at a side opposite 161 to the air outlet 158, such that the filtered air can only exit the air filter unit 150 through the air outlet 158.

As further illustrated in Fig. 2, the air filter unit 150 includes the cover device 160. In the embodiment shown in Fig. 2, the cover device 160 includes a plurality of tubular cover members 162A to 162D having different diameters and engaging each other, such that the plurality of cover members 162A to 162D are telescopically movable along the center axis C. For example, each of the plurality of cover members 162A to 162D includes at least one protrusion and at least one elongated recess receiving the at least one protrusion of an adjacent cover member 162A to 162D for providing axial movement between adjacent cover members 162A to 162D. Although Fig. 2 depicts in total four cover members 162A to 162D, there may also be more or less than four cover members 162A to 162D telescopically engaging each other.

As shown in Fig. 2, the cover members 162A to 162D are externally attached to the housing 151 for adjusting the size of the air inlet 156. In some embodiments, the cover members 162A to 162D may be disposed within the air flow path 154 for covering the air filter 152 from the inside

In some embodiments, the cover device 160 may include one elastic cover member which can be accordion-like folded. In such case, the elastic cover member folded accordion like in a retracted state may define the open position, whereas the elastic cover member in an extracted state may define the closed position. In some embodiments, the elastic cover may be provided in a tubular shape either arranged about the outer lateral surface of the air filter 152 or about the inner lateral surface of the air filter 152.

As shown in Fig. 2, the cover members 162A to 162D are in a fully retracted position, such that the air inlet 156 has its maximum size. The air inlet 156 of the air filter unit 150 of the embodiment shown in Fig. 2 is defined by an annular portion extending about the circumference of the cylindrical air filter unit 150 with a width W defined by the clearance between the cover member 162D and the flange member 153.

The cover device 160 further includes at least one actuator 166 connected to, for example, the cover member 162D via an actuator rod 168. The at least one actuator 165 being configured to, upon receiving a corresponding signal from the control unit 30 (see Fig. 1), move the cover member 162D along the center axis C, thereby at least partially covering the air inlet 156. Due to the cover member 162D engaging the cover member 162C, which in turn engages the cover members 162A and 162B, respectively, also the other cover members 162A to 162C may be moved thereby at least partially closing the air inlet 156 in an infinitely variable manner.

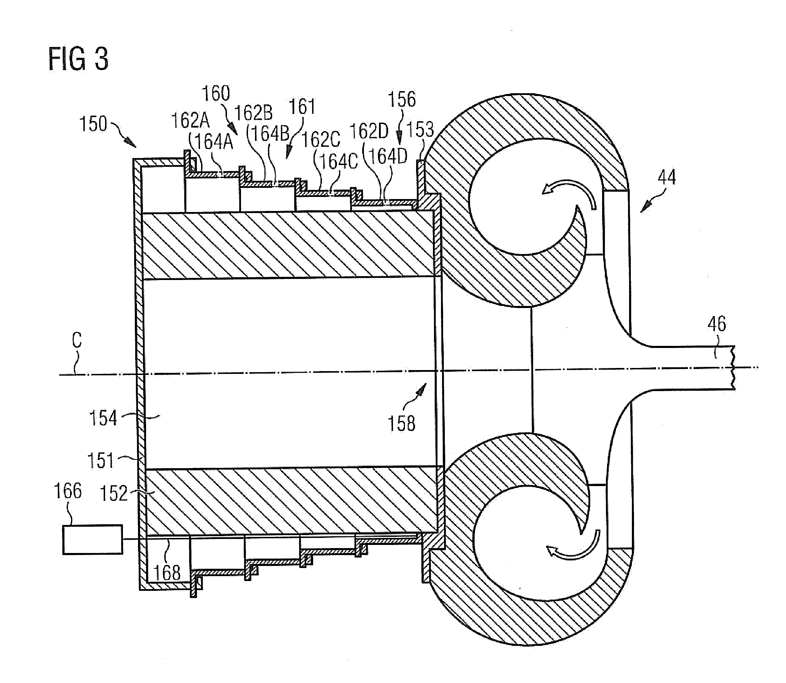

As further indicated in Fig. 2, in some embodiments, the cover members 162A to 162D may include a cover member opening 164A to 164D. The cover member openings 164A to 164D may be configured to ensure that at least some fresh air is sucked into the air flow path 54 through the air inlet 56, even when the cover members 162A to 162D are in the closed position (see Fig. 3), and/or in general that the air flow is distributed along the surface of the air filter 152.

Referring now to Fig. 3, the air filter unit 150 is depicted with the cover device 160 in a closed position in which the air inlet 156 is fully closed by the tubular cover members 162A to 162D which have been moved by the actuator 159. In such case, the amount of fresh air sucked in from the engine's environment into the air flow path 154 is less than the amount of fresh air sucked into the air flow path 154 with the cover device 160 in the open position (see Fig. 2).

It should be understood that the actuator 166 may position the cover members 162A to 162D in any position between the open position of Fig. 2 and the closed position of Fig. 3, thereby controlling the amount of fresh air that can be sucked into the air flow path 154. The control unit 30 may determine a desired air-to-fuel ratio to be supplied to the cylinders 26A to 26D and, in dependency thereof, may provide a corresponding signal to the actuator 166. The width W may be proportional to the amount of fresh air sucked into the air flow path 154, such that the control unit 30 is capable of controlling the amount of fresh air flowing into the compressor 44 and, hence, into the intake manifold 22.

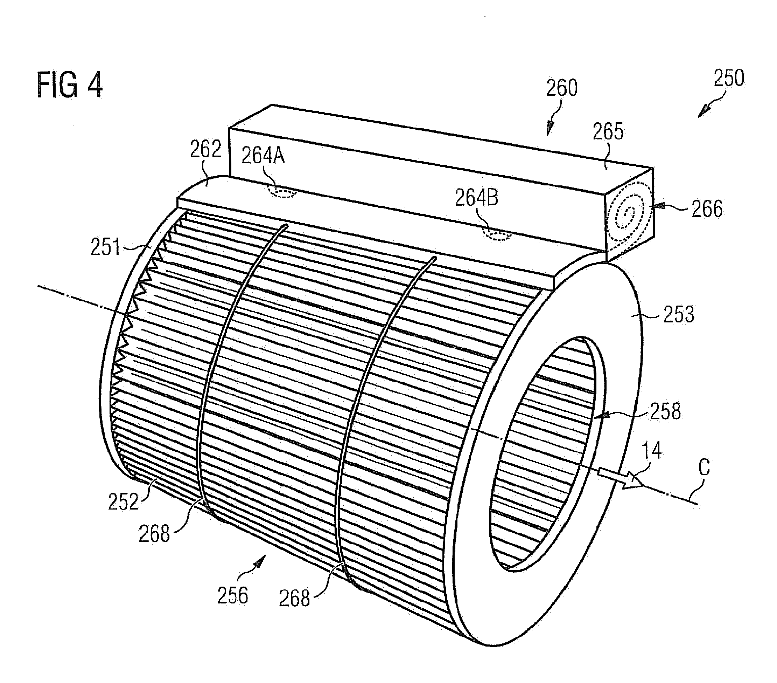

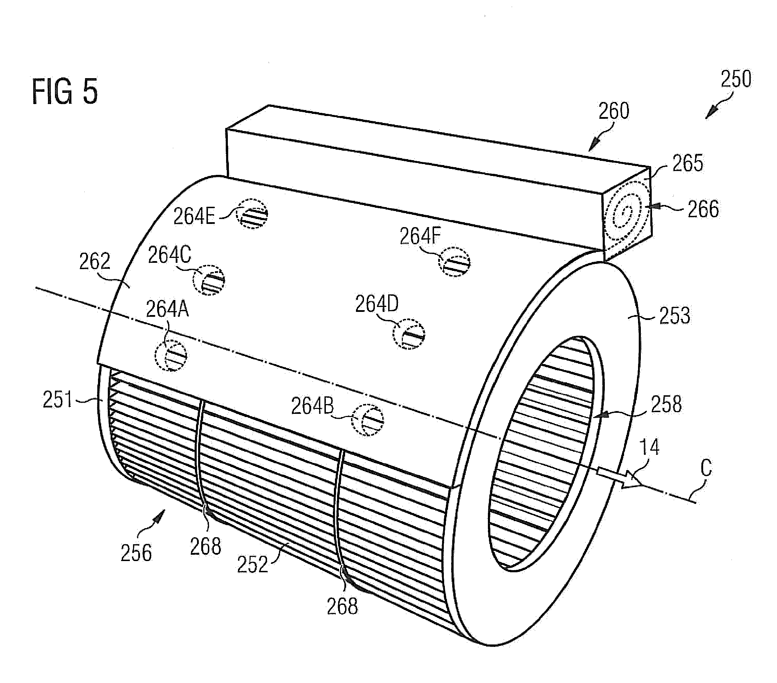

Referring now to Figs. 4 and 5, a further embodiment of an exemplary air filter unit 250 is shown. The air filter unit 250 includes a housing 251, and air filter 252 at least partially accommodated within the housing 251, and a cover device 260. The cover device 260 has a movable cover member 262, which is rollable housed in a cover member housing 265 when being in the open position indicated in Fig. 4. The adjustable cover member 262 is movable along the entire circumference of the cylindrical air filter 252, thereby adjusting the size of the air inlet 256. The actuator 266 housed in the cover member housing 265 and the cover member 262 may function in a manner similar to a roller blind, which will be described in greater detail below.

In Fig. 4, the cover member 262 is in position substantially corresponding to the closed position, wherein in Fig. 5 the cover member 262 is in a position somewhere between the open position and the closed position. The closed position should be referred to as the position of the cover member 262 fully covering the entire circumference of the air filter unit 250. The cover member housing 265 may include a slot-like opening through which the movable cover member 262 may at least partially extend.

For moving the cover member 262, at least one actuator rope 268 may extend from one end of the actuator 266 about the entire circumference of the air filter unit 250 to an opposite end of the actuator 266. The at least one actuator rope 268 may serve as a guide for guiding the cover member 262 about the circumference of the air filter unit 250 for at least partially covering the air inlet 256. As indicated in dotted lines in Figs. 4 and 5, the cover member 262 may be at least partially wound and stored as a coil within the actuator 266. In some embodiments, instead of providing an actuator rope 268, there may be at least one guide bar configured to guiding the cover member 262 about the air filter unit 250.

In some embodiments, and as shown in Figs. 4 and 5, the cover member 162 may include a plurality of cover member openings 264A to 264F enabling at least some fresh air to be sucked into the air flow path 254 (not explicitly denoted in Figs. 4 and 5).

In the embodiments shown in Fig. 2 to 5 the actuator 166, 266 may be an electric actuator, a hydraulic actuator, a pneumatic actuator, or any other kind of actuator suitable for moving the adjustable cover member 162A to 162D, 262. In some embodiments, the actuator 166, 266 may either pull or push the adjustable cover member 162A to 162D, 262 for at least partially covering or uncovering the air inlet 156, 256 of the air filter unit 150, 250.

### Industrial Applicability

In the following, operation of the exemplary disclosed air filter units 150, 250 is described with respect to Figs 1 to 5.

During normal operation mode of the internal combustion engine 10, which means in case of an engine load of, for instance, more than 30 % of the maximum engine load, air is sucked through the air filter unit 150, 250 into the compressor 44, where the air is compressed and supplied to the intake manifold 22. Under this condition, the control unit 30 is configured to position the cover member 162A to 162D, 262 of the cover device 160, 260 in the open position, such that the air inlet 156, 256 is at its maximum size with the maximum width W.

However, during start up, idle condition or low load operation of the internal combustion engine, which means in case of an engine load of, for example, less than 30 % of the maximum engine load, the air/fuel mixture may have a lean air-to-fuel ratio which may drive the internal combustion engine into misfiring or, in some circumstances, the internal combustion engine may shut down.

For reducing the amount of air flowing into the intake manifold and, hence, together with the compressed fuel into the combustion cylinders, the control unit 30 is configured to provide a signal to the control unit 30 for displacing the adjustable cover member 162A to 162D, 262. In such case, the adjustable cover member 162A to 162D, 262 at least partially covers the air inlet 156, 256, such that the amount of fresh air sucked into the air flow path 154, 254 is at least partially reduced, thereby controlling the amount of air. As a result, the air-to-fuel ratio may be controlled to desired values for having an efficient and desired combustion process within the combustion cylinders 26A to 26D.

The degree of coverage of the air inlet 156, 256 may be proportional to the amount of air sucked into the air flow path 154, 254 through the air filter 152, 252, such that the air-to-fuel ratio of the air/fuel mixture supplied to the combustion cylinders 26A to 26D may be effectively controlled without an additional throttle valve usually provided between the compressor 44 and the intake manifold 22.

In some embodiments, the engine load may be associated with an appropriate amount of coverage of the air inlet 156, 256. In such case, the control unit 30 may include, for example, a look-up table pre-stored in a memory device, wherein the look-up table may correlate the present engine load with an appropriate amount of coverage of the air inlet 156, 256.

The air filter unit according to the present disclosure finds particularly application in internal combustion engines running on gaseous fuel, such as, for instance, natural gas. Furthermore, the air filter unit according to the present disclosure finds also application in dual fuel internal combustion engines, especially during the gaseous fuel mode of the dual fuel internal combustion engine. During the gaseous fuel mode, the air-to-fuel ratio can be effectively controlled by adjusting the size of the air inlet, particularly during low load operation of the dual fuel internal combustion engine, for example, during an engine load of less than 30 % of the maximum engine load.

In some embodiments, the control unit 30 may be configured to control the amount of coverage of the air filter unit 150, 250 in dependeny of, for example, a target intake pressure or a target air-to-fuel ratio of the air/fuel mixture combusted within the cylinders. In such embodiments, the control unit 30 may receive signals corresponding to the respective engine parameter and may then accordingly adjust the size of the air inlet

Although the preferred embodiments of this invention have been described herein, improvements and modifications may be incorporated without departing from the scope of the following claims.

## Claims

1. An air filter unit (150; 250) for attaching to a compressor (44) of a turbocharger (40) of an internal combustion engine (10), the internal combustion engine (10) being configured to combust an air/fuel mixture having a desired air-to-fuel ratio, the air filter unit (150; 250) comprising:
a housing (151; 252) having an air inlet (156; 256) and an air outlet (158; 258) configured to be fluidly connected to the compressor (44); and
an air filter (152; 252) disposed within the housing (151; 251) between the air inlet (156; 256) and the air outlet (158; 258),
wherein, during operation of the internal combustion engine (10), the air inlet (156; 256) is adjustable in size with a cover device (160; 260) having an adjustable cover member (162A to 162D; 262) for at least partially controlling the air-to-fuel ratio.

2. The air filter unit (150; 250) according to claim 1, wherein the adjustable cover member (162A to 62D; 262) is movable between an open position and a closed position, the adjustable cover member (162A to 162D; 262) being configured to,
in the open position, provide a maximum size of the air inlet (156; 256), and
in the closed position, at least partially cover the air inlet (156; 256).

3. The air filter unit (150; 250) according to claim 2, wherein the cover device (160; 260) further includes an actuator (166; 266) configured to move the adjustable cover member (162A to 162D; 262) between the open position and the closed position.

4. The air filter unit (150) according to any one of the preceding claims, wherein the air filter (152) defines an air flow path (154) extending between the air inlet (156) and the air outlet (158),
wherein the adjustable cover member (162A to 162D) is externally attached to the housing (151), and/or
wherein the adjustable cover member (162A to 162D) is disposed within the air flow path (154).

5. The air filter unit (150) according to any one of claims 2 to 4, wherein the cover device (160) includes a plurality of cover members (162A to 162D) telescopically engaging each other.

6. The air filter unit (150) according to claim 4 or 5, wherein each of the plurality of cover members is a tubular cover member (162A to 162D) with different diameters for telescopically engaging each other.

7. The air filter unit (250) according to any one of claims 2 or 4, wherein the adjustable cover member (262) is configured to,
in the open positon, be wound to a coil, and
in the closed position, be at least partially unwound for at least partially extending about the circumference of the air filter (252) thereby at least partially covering the air inlet (256).

8. The air filter unit (250) according to claim 7, wherein the cover device (260) further includes a cover member housing (265) configured to at least partially accommodate the at least partially wound cover member (262).

9. The air filter unit (250) according to any one of claims 7 or 8, wherein the cover device (260) further includes a guiding device (268) configured to guide the cover member (262) about the circumference of the air filter (252).

10. The air filter unit (150; 250) according to any one of the preceding claims, wherein the air filter is a cylindrical air filter (252) including a center axis (C) and an air flow path (254) extending along the center axis (C).

11. The air filter unit (150; 250) according to any one of the preceding claims, wherein the adjustable cover member (162A to 162D; 262) includes at least one cover member opening (164A to 164D; 264A to 264F).

12. A compressor (44) of a turbocharger (40) of an internal combustion engine (10), comprising:
a compressor inlet, and
at least one air filter unit (150; 250) according to any one of the preceding claims, the air filter unit (150; 250) being attached to the compressor inlet.

13. An internal combustion engine (10) configured to combust an air/fuel mixture having a desired air-to-fuel ratio, the internal combustion engine (10) comprising:
at least one compressor (44) of a turbocharger (40) according to claim 12; and
a control unit (30) configured to control the air-to-fuel ratio by adjusting the size of the air inlet (156; 256).

14. A method for controlling an air-to-fuel ratio of an air/fuel mixture to be combusted by an internal combustion engine (10), the internal combustion engine (10) including a compressor (44) of a turbocharger (40) and at least one air filter unit (150; 250) having an air outlet (158; 258) fluidly connected to the compressor (44) and an air inlet (156; 256), the method comprising:
adjusting the size of the air inlet (156; 256) during operation of the internal combustion engine (10).

15. The method according to claim 14, wherein adjusting the size of the air inlet (156; 256) includes at least partially covering the air inlet (156; 256) with an adjustable cover member (162A to 162D; 262) of a cover device (160; 260).
